(19) **Europäisches Patentamt / European Patent Office / Office européen des brevets**

(11) **EP 1 464 435 B1**

(12) **EUROPEAN PATENT SPECIFICATION**

(45) Date of publication and mention
of the grant of the patent:
**26.03.2008 Bulletin 2008/13**

(51) Int Cl.:
**B23K 26/03** (2006.01)

(21) Application number: **03016994.0**

(22) Date of filing: **25.07.2003**

(54) **Method for controlling the quality of an industrial laser process**

Verfahren zur Qualitätskontrolle eines industriellen Laserprozesses

Procédé de contrôle qualité d'un processus laser industriel

(84) Designated Contracting States:
**AT BE BG CH CY CZ DE DK EE ES FI FR GB GR HU IE IT LI LU MC NL PT RO SE SI SK TR**

(30) Priority: **04.04.2003 IT TO20030263**

(43) Date of publication of application:
**06.10.2004 Bulletin 2004/41**

(73) Proprietor: **C.R.F. SOCIETÀ CONSORTILE PER AZIONI**
**10043 Orbassano (Torino) (IT)**

(72) Inventors:
- **D'Angelo, Giuseppe**
  **10095 Grugliasco (Torino) (IT)**
- **Pasquettaz, Giorgio**
  **13100 Vercelli (IT)**

(74) Representative: **Notaro, Giancarlo et al**
**Buzzi, Notaro & Antonielli d'Oulx S.r.l.**
**Via Maria Vittoria 18**
**10123 Torino (IT)**

(56) References cited:
**EP-A- 1 275 464**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method according to the preamble of claim 1 for controlling the quality of industrial laser processes, comprising the following steps:

focusing a laser beam onto a treatment area,
detecting the radiation emitted by the treatment area by means of photodiode detecting means, and
processing the signals emitted by said detecting means.

The present invention also relates to a system according to the preamble of claim 9.

Methods and systems as mentioned above have already been suggested and used in the past for on-line monitoring of laser welding processes, in particular in the case of sheet welding. The control system can evaluate the presence of porosities in the welding area or, in the case of butt-coupled thin metal sheets, the presence of faults due to sheet overlapping or separation. Similar systems have also been used for controlling the quality of laser cutting operations.

The drawback of the systems used until today consists in that quality control is based on a comparison between the signals detected during the process and one or more predefined reference signals indicating a good quality process. Said reference signals, usually varying from two to ten, are prepared starting from several samples of good quality processes. Obviously, said procedure implies the presence of a skilled operator who can certify the good quality of the process when reference signals are being created, requires time and sometimes involves waste of material (which is used to carry out the samples required in order to obtain reference signals). In some cases reference signals indicating a process with faults are also prepared, which involves further problems and difficulties.

From European patent application EP-A-1275464, issued to the present Applicant, it is known to split up the signal collected by the photodiode into blocks, calculating the average value of the signal in each sampled block and considering blocks having a value that is lower than or the same as photodiode offset, which indicate the presence of a fault. Said method eliminates the need for a reference, but enables only quite a superficial fault detection.

The aim of the present invention is to overcome all the aforesaid drawbacks.

In order to achieve said aim, the object of the invention is a method for controlling the quality of an industrial laser process, having the characteristics referred to at the beginning and further characterized in that said step of processing the signals includes the operations of calculating coefficients of discrete wavelet transform with respect to a plurality of scale values, thus obtaining a plurality of transformed signals, and of processing said transformed signals so as to obtain one or more values representing the quality of the process, so that the control of process quality can be carried out only on the basis of the signal thus processed, without the need for a comparison with a predefined reference signal corresponding to a good quality process.

In the preferred embodiment, said step of processing the transformed signals includes the operations of calculating for each signal belonging to the plurality of transformed signals a total standard deviation; splitting up each signal belonging to the set of transformed signals into blocks in the time domain and calculating a standard deviation on each of said blocks, thus obtaining values of standard block deviation; converting said plurality of transformed signals into a plurality of binary signals through a step of comparison between their total standard deviation and standard block deviation; carrying out a step of sum sample by sample of all signals belonging to said plurality of binary signals, thus obtaining a sum value; using said sum value as value representing process quality, by comparing said sum value with error ranges so as to generate an error signal defining process quality.

Tests carried out by the Applicant have shown that thanks to the aforesaid characteristics, the simple analysis of the signal detected during the process is thus sufficient to enable the detection of possible faults, without preparing reference signals indicating a good quality and therefore eliminating quite complicated operations for preparing reference signals.

Obviously, another object of the invention is also the system of claim 9 for controlling the quality of a laser process implementing the method described above, as well as the corresponding data processing product of claim 15 that can be uploaded directly into the storage unit of a numeric processing unit such as a processor and comprising portions of software code so as to carry out the method according to the invention when the product is executed on a processing unit.

Further characteristics and advantages of the invention will be evident from the following description referring to the accompanying drawings, provided as a mere non-limiting example, in which:

Figure 1 is a schematic view of a system implementing the method according to the invention,
Figure 2 is a schematic view of a detail of Figure 1,
Figure 3 is a block diagram of the method according to the invention.

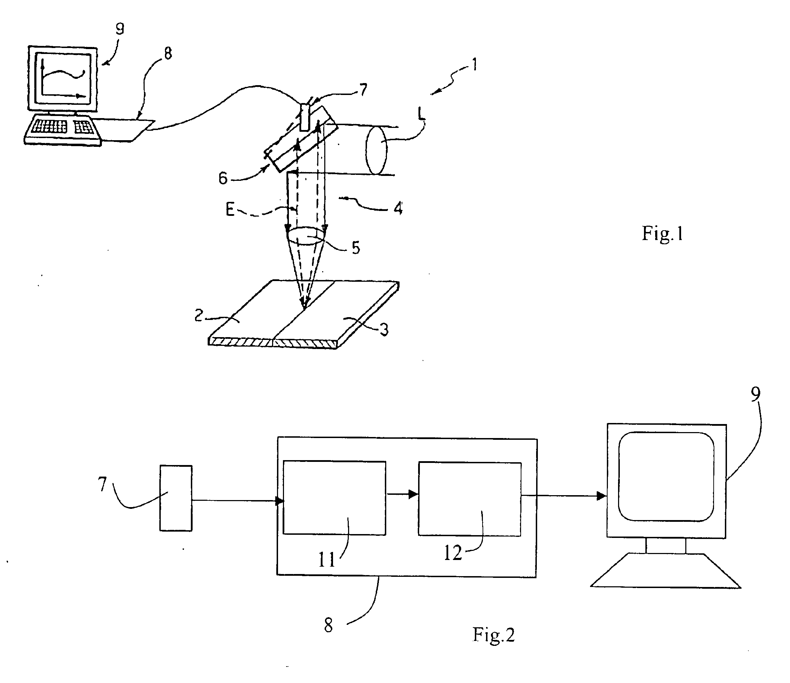

With reference to Figure 1, the numeral 1 globally refers to a system for controlling the quality of a laser process, for instance a laser welding process. The example refers to the case of two sheets 2, 3 welded by means of a laser beam. The numeral 4 globally refers to the focusing head, comprising a lens 5 reached by the laser beam generated by a laser generator (not shown) and reflected by a semi-reflecting mirror 6, after going through a lens L. The radiation E emitted by the welding area goes through the reflecting mirror 6 and is detected by a sensor 7 comprising a photodiode that can send its output signal to an electronic control and processing unit 8 associated to a personal computer 9.

In a practical embodiment the semi-reflecting mirror 6 used was a ZnSe mirror, with a diameter of 2 inches, thickness 5 mm. The sensor 7 was a photodiode with spectral sensitivity of 190 to 1100 nm, an active area of 1.1x1.1 mm and a quartz window.

Figure 2 shows in further detail the electronic control and processing unit 8 associated to the personal computer 9. Said processing unit 8 comprises an antialiasing filter 11 acting onto the signal sent by the sensor 7, then it is provided for an acquisition card 12 equipped with an analogical-digital converter, which samples the filtered signal and converts it into the numeric mode. Said acquisition card 12 is preferably associated directly to the personal computer 9.

According to the invention, the acquisition card 12 collects the signal emitted by the sensor 7 at a frequency above $2^{16}$ Hertz.

Always in a practical embodiment, the acquisition card 12 is a data acquisition card type PC card NI 6110E, with maximum collection frequency of 5 Ms/sec.

The antialiasing filter 11 filters the signal by means of a band-pass filter (for instance a filter IIR Butterworth) between 4 kHz and 10 kHz.

According to the invention, in the personal computer 9 is implemented a quality control process based on a wavelet test of the collected signal.

A wavelet test procedure is a test procedure such as Fourier and Short-Time Fourier (STFT), tests, which envisages to carry out a transform operation on the signal in the time domain *f(t)* such as:

$$C(a,b) = \int_{-\infty}^{\infty} f(t)Y(a,b,t)dt$$

where C refers to a transform coefficient, a to a scale parameter, b to a position parameter and Y to a wavelet function.

The wavelet test is usually carried out by choosing a wavelet function Y, which preferably maximizes the value of the coefficients C, and by applying said wavelet function Y to a first portion of the signal f(t). Said operation is then repeated by moving by means of position parameter *b* the wavelet function Y on time axis until the whole length of the signal f(t) is covered. The operation is then repeated by varying scale parameter a on a set of previously selected values. At the end of the wavelet test procedure a set of coefficients C is obtained as a function of scale a and position *b* parameters, which set is usually represented on a three-dimensional graph having on the abscissa time, on the ordinate the value of scale parameter a and on the coordinate z the values of coefficients C.

Low values of scale parameter a correspond to a greater detail for the analysis of fast signal variations, whereas high values of scale parameter a correspond to a smaller detail and the analysis is more suitable to the main features of the signal.

For signals whose features are not previously known or cannot be represented analytically, such as the signal generated by a sensor, it is convenient to use a discrete wavelet transform or DWT, calculated with respect to a finite number of values of scale parameter a and of position parameter *b*.

Usually the discretization used for the number of values for scale parameter a and position parameter *b* is:

$$\begin{cases} a = a_0^m \\ b = nab_0 \end{cases}$$

where m, n refer to integer indexes, and $a_0$ and $b_0$ to basic coefficients above one. In particular, the so-called dyadic case is used, in which $a_0=2$.

The discrete wavelet function $\psi$ obtained is of the type:

$$\psi_{o.b}(t) = \frac{1}{\sqrt{a}}\,\psi(\frac{t-b}{a}) = 2^{m/2}\,\psi\left(\frac{t - \frac{n}{2^m}}{\frac{1}{2^m}}\right) = \psi_{m,n}(t) = 2^{m/2}\,\psi\left(2^m t - n\right)$$

The wavelet transformation DWT can be efficiently implemented by means of an iterated filter bank, which carries out a sub-band coding. Said filters can be implemented through a DSP or merely via software.

The method according to the invention, therefore, envisages to process the signal collected by a sensor through a discrete wavelet test, thus obtaining various transformed signals corresponding to the application of different scale parameters. Said transformed signals are then processed so as to define an error function and to evaluate the quality of the laser process.

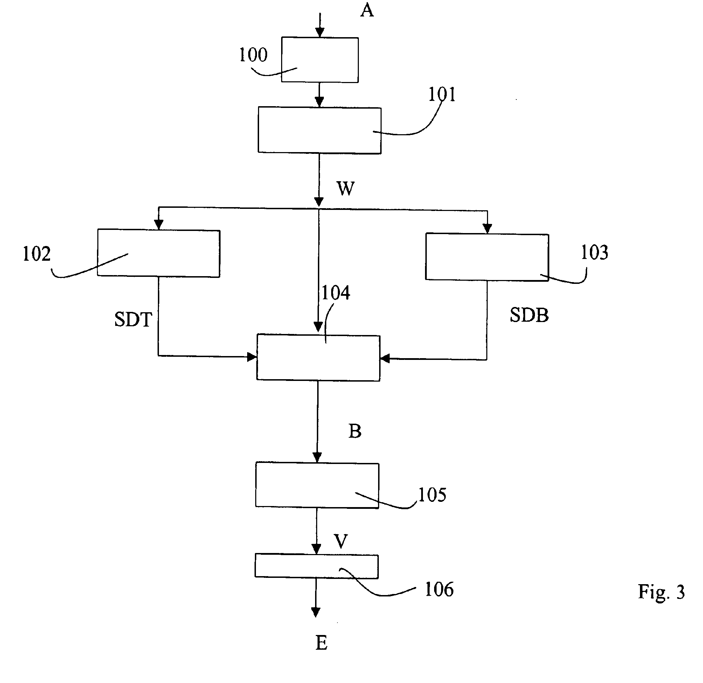

Figure 3 is a block diagram showing the method for quality control according to the invention, in which the collected signal A, sampled at a frequency above $2^{16}$ Hertz and having therefore a number N, N being an integer, of samples of the collected signal A getting into the personal computer 9, undergoes a noise purging step, referred to by a block 100, by means of a first specific operation of wavelet transformation involving a number of scales used corresponding to $\log_2 N$.

The collected signal A, purged from noise, then undergoes the following processing steps:

- a step of evaluation 101 of the coefficients of discrete wavelet transform for each among S scales, S being an integer corresponding to $\log_2 N - \log_2 32$. The value of $\log_2 32$ is chosen on the basis of a good minimum temporal resolution. Said step of evaluation of the coefficients of discrete wavelet transform therefore generates a number S of approximated transformed signals W, i.e. frequency-approximated and time-resolved, and a number of high-detail transformed signals W, i.e. frequency-resolved and little time-detailed;
- for each signal belonging to the set of transformed signals W, a step of calculation, referred to with 102, of total standard deviation SDT;
- for each signal belonging to the set of transformed signals W, a step of splitting up into blocks in the time domain referred to with block 103. Block length is set as a function of the sensitivity to be obtained in the quality control process; in block 103 a step of calculation of standard deviation on each of said block is carried out, which gives S values of standard block deviation DSB;
- a step of binary conversion of the signals, referred to by block 104, obtained through a step of comparison between total standard deviation DST and standard block deviation DSB according to the following conditions:

    - if DSB>DST the signal is set to logic one;
    - if DSB<DST the signal is set to logic zero; thus obtaining 2S binary signals B having different length, which undergo a step of extension of all binary signals B to the same length N;
    - a step of sum sample by sample of all signals, referred to with block 105, thus obtaining a sum signal V with values varying from 0 to 2S;
    - a step of comparison of the sum signal V with three error ranges, which thus generates a three-value error signal E: a first error range, for values of sum signal of 0 to 2S/3, includes relevant errors, a second error range, for values of sum signal of 2S/2 to 4S/3, includes errors whose acceptability is decided by the operator, a third error range, for values of sum signal of 4S/3 to 2S, is assigned no error.

Studies and experiences carried out by the Applicant have proved that by using said quality control procedure the splitting up into ranges as described above indicates the presence of faults.

In other words, thanks to the features mentioned above, the system according to the invention can identify welding faults without a comparison with reference signals indicating a good quality welding, but only on the basis of an analysis of the signal obtained during the real process. In practice, when there is a welding fault, accordingly the sum signal takes on values lower than 4S/4, the lower the values the more relevant the fault is.

It is thus possible to avoid complicated operations, which are necessary with known systems, for preparing reference signals.

**Claims**

1.  Method for controlling the quality of industrial laser processes, comprising the following steps:

focusing a laser beam onto a treatment area,
detecting the radiation emitted by the treatment area by means of photodiode detecting means, and
processing the signals emitted by said detecting means,
**characterized in that** said step of processing the signals includes the following operations:

- calculating coefficients of discrete wavelet transform with respect to a plurality of scale values, thus obtaining a plurality of transformed signals (W) ;
- processing said transformed signals (W) so as to obtain one or more values (V) representing the quality of the process, so that the control of the quality of the process can be carried out only on the basis of the signal thus processed, without the need for a comparison with a predefined reference signal corresponding to a good quality welding.

2. Method according to claim 1, **characterized in that** said step of processing the transformed signals (W) comprises the following steps:

- calculating (102) for each signal belonging to the plurality of transformed signals (W) a total standard deviation (SDT);
- splitting up (103) each signal belonging to the set of transformed signals (W) into blocks in the time domain and calculating a standard deviation on each of said blocks, thus obtaining values of standard block deviation (DSB);
- converting (104) said plurality of transformed signals (W) into a plurality of binary signals (B) through a step of comparison between their total standard deviation (DST) and standard block deviation (DSB);
- carry out (105) a step of sum sample by sample of all signals belonging to said plurality of binary signals (B), thus obtaining a sum value (V) ;
- using (106) said sum value (V) as value representing process quality, by comparing said sum value with error ranges so as to generate an error signal (E) defining process quality.

3. Method according to claim 1 or 2, **characterized in that**
said plurality of scale values with respect to which the coefficients of discrete wavelet transform are calculated, corresponds to a number S of scale values, S being an integer corresponding to $\log_2 N - \log_2 32$, where N is a number of collected samples.

4. Method according to claim 2 or 3, **characterized in that**
said operation of converting (104) said plurality of transformed signals (W) into a plurality of binary signals (B) envisages to check the following conditions:

- if DSB>DST the signal is set to logic one;
- if DSB<DST the signal is set to logic zero.

5. Method according to one of the claims 2 to 4, **characterized in that**
said error signal (E) is obtained by comparing said sum value (V) with three error ranges.

6. Method according to one of the claims 2 to 5, **characterized in that** the operation of converting (104) said plurality of transformed signals (W) into a plurality of binary signals (B) includes the operation of extending all signals belonging to said plurality of binary signals (B) to the same length (N).

7. Method according to one of the claims 2 to 6, **characterized in that** said step of processing the signals emitted by said detecting means envisages previously to collect a signal (A) at a sampling frequency above $2^{16}$Hz.

8. Method according to one of the claims 2 to 7, **characterized in that** said it further envisages to carry out a noise purging operation (100) on the collected signal (A) by applying a first specific operation of wavelet transformation involving a number of scales used corresponding to $\log^2 N$.

9. System for controlling the quality of a laser process implementing method of claim 1, comprising:

means (4) for focusing a laser beam (L) onto a welding area,
photodiode detecting means (7) for detecting the radiation emitted (E) by the welding area, and
an electronic control and processing unit (8, 9) for processing the signals emitted by said detecting means (7), **characterized in that**
said electronic control and processing unit (8, 9) for processing the signals emitted by said detecting means (7) implements the method for controlling the quality of a laser process according to claims 1 to 7.

10. System according to claim 9, **characterized in that** the aforesaid electronic control and processing means (8, 9) comprise a collection unit (8) for collecting the signal coming from said detecting means at a frequency above $2^{16}$Hz.

11. System according to claims 9 or 10, **characterized in that** the aforesaid focusing means comprise a semi-reflecting mirror reflecting the laser beam to be focused onto the treatment area to be gone through by the radiation emitted by the welding area so as to let it reach the detecting means.

12. System according to claim 9, **characterized in that** the aforesaid photodiode detecting means comprise a photodiode with spectral sensitivity of 190 to 1100 nm.

13. System according to claim 9, **characterized in that** the aforesaid detecting means comprise a focusing lens (5).

14. System according to claim 9, **characterized in that** said electronic control and processing unit (8, 9) comprises an iterated filter bank, which executes a sub-band encoding so as to implement an operation of discrete wavelet transformation.

15. Data processing product to be uploaded directly into the storage unit of a numeric processor and comprising software code portions so as to carry out the method according to any of the claims 1 to 8 when the product is executed on a processor.

**Patentansprüche**

1. Verfahren zur Qualitätskontrolle von industriellen Laserprozessen, in dem die folgenden Schritte enthalten sind:

   Fokussierung eines Laserstrahlenbündels auf ein Bearbeitungsgebiet;
   Detektieren der Strahlung, die vom Bearbeitungsgebiet emittiert wird, mit einer Fotodioden-Detektorvorrichtung, und
   Verarbeiten der von der genannten Detektorvorrichtung emittierten Signale,
   **dadurch gekennzeichnet, dass** der Schritt des Verarbeitens der Signale die folgenden Operationen enthält:

   - Berechnen von Koeffizienten einer diskreten Wavelet-Transformation bezüglich einer Vielzahl von Skalierungswerten, um so eine Vielzahl von transformierten Signalen (W) zu erhalten;
   - Verarbeiten der transformierten Signale (W), um so einen oder mehrere Werte (V) zu erhalten, die die Qualität des Prozesses darstellen, so dass die Qualitätskontrolle des Prozesses nur auf der Basis des so verarbeiteten Signals durchgeführt werden kann und ohne Notwendigkeit eines Vergleichs mit einem vordefinierten Referenzsignal, das einer Schweißung mit guter Qualität entspricht.

2. Verfahren nach Anspruch 1, **dadurch gekennzeichnet, dass** der Schritt des Verarbeitens der transformierten Signale (W) die folgenden Schritte enthält:

   - Berechnen (102) einer gesamten Standardabweichung (SDT) für jedes Signal, das zu der Vielzahl von transformierten Signalen (W) gehört;
   - Aufspalten (103) jedes Signals, das zu der Menge der transformierten Signale (W) gehört, in Blöcke in der Zeitdomäne und Berechnen einer Standardabweichung für jeden der Blöcke, um so Werte einer Standard-Block-Abweichung zu erhalten (DSB);
   - Umwandeln (104) der Vielzahl von transformierten Signalen (W) in eine Vielzahl von Binärsignalen (B) durch einen Vergleichsschritt zwischen ihrer gesamten Standardabweichung (DST) und der Standard-Block-Abweichung (DSB);
   - Ausführen (105) eines Schrittes zum Summieren Probe für Probe aller Signale, die zu der Vielzahl von Binärsignalen (B) gehören, um so einen Summenwert (V) zu erhalten;
   - Verwenden (106) des Summenwertes (V) als Wert, der die Prozessqualität repräsentiert, durch Vergleichen des Summenwertes mit Fehlerbereichen, um so ein Fehlersignal (E) zu erzeugen, das die Prozessqualität definiert.

3. Verfahren nach Anspruch 1 oder 2, **dadurch gekennzeichnet, dass** die Vielzahl von Skalierwerten, bezüglich derer die Koeffizienten der diskreten Wavelet-Transformation berechnet werden, einer Anzahl S von Skalierwerten entspricht, wobei S eine ganze Zahl darstellt, die $\log_2 N - \log_2 32$ entspricht, wobei N eine Anzahl der erfassten Proben ist.

4. Verfahren nach Anspruch 2 oder 3, **dadurch gekennzeichnet, dass** die Operation des Umwandelns (104) der Vielzahl von transformierten Signalen (W) in eine Vielzahl von Binärsignalen (B) die folgenden Bedingungen prüfen soll:

   - wenn DSB>DST, wird das Signal auf logisch Eins gesetzt;
   - wenn DSB<DST, wird das Signal auf logisch Null gesetzt.

5. Verfahren nach einem der Ansprüche 2 bis 4, **dadurch gekennzeichnet, dass** das Fehlersignal (E) erhalten wird durch Vergleich des Summenwertes (V) mit drei Fehlerbereichen.

6. Verfahren nach einem der Ansprüche 2 bis 5, **dadurch gekennzeichnet, dass** die Operation des Umwandelns (104) der Vielzahl von transformierten Signalen (W) in eine Vielzahl von Binärsignalen (B) die Operation enthält, alle Signale, die zu der Vielzahl von Binärsignalen (B) gehören, auf die gleiche Länge (N) auszuweiten.

7. Verfahren nach einem der Ansprüche 2 bis 6, **dadurch gekennzeichnet, dass** dem Schritt des Verarbeitens der von der Detektor-Vorrichtung emittierten Signale vorausgeht, ein Signal (A) mit einer Abtastfrequenz von mehr als $2^{16}$ Hz zu erfassen.

8. Verfahren nach einem der Ansprüche 2 bis 7, **dadurch gekennzeichnet, dass** weiter vorgesehen ist, bei den erfassten Signalen (A) eine Rauschentfernungs-Operation (100) durchzuführen, indem eine erste spezifische Operation einer Wavelet-Transformation durchgeführt wird, die eine Anzahl von Skalierungen verwendet, die $\log^2 N$ entsprechen.

9. System zur Qualitätskontrolle eines Laserprozesses, in welchem das Verfahren von Anspruch 1 eingesetzt wird, und in dem enthalten sind:

   Mittel (4) zum Fokussieren eines Laserstrahlenbündels (L) auf einen Schweißbereich,
   Fotodioden-Detektormittel (7) zum Detektieren der vom Schweißbereich ausgesandten Strahlung (E), und
   eine elektronische Steuer- und Verarbeitungseinheit (8, 9) zum Verarbeiten der Signale, die von dem Detektormittel (7) emittiert werden, **dadurch gekennzeichnet, dass**
   die elektronische Steuer- und Verarbeitungseinheit (8, 9) zum Verarbeiten der Signale, die von dem Detektormittel (7) emittiert werden, das Verfahren zur Qualitätskontrolle eines Laserprozesses nach den Ansprüchen 1 bis 7 einsetzt.

10. System nach Anspruch 9, **dadurch gekennzeichnet, dass** die elektronische Steuer- und Verarbeitungseinheit (8, 9) eine Erfassungseinheit (8) zum Erfassen des Signals aufweist, das vom Detektormittel mit einer Frequenz von mehr als $2^{16}$ Hz eingeht.

11. System nach Anspruch 9 oder 10, **dadurch gekennzeichnet, dass** die Fokussierungsmittel einen halbreflektierenden Spiegel enthalten, der das auf das Bearbeitungsgebiet zu fokussierende Laserstrahlungsbündel reflektiert und von der vom Schweißgebiet emittierten Strahlung durchlaufen wird, um sie zum Detektormittel durchzulassen.

12. System nach Anspruch 9, **dadurch gekennzeichnet, dass** das Fotodetektormittel eine Fotodiode mit einer spektralen Empfindlichkeit von 190 bis 1100 nm enthält.

13. System nach Anspruch 9, **dadurch gekennzeichnet, dass** die Detektormittel eine Fokussierungslinse (5) enthalten.

14. System nach Anspruch 9, **dadurch gekennzeichnet, dass** die elektronische Steuer- und Verarbeitungseinheit (8, 9) eine iterierte Filterbank enthält, die eine Sub-Band-Codierung durchführt, um so eine Operation der diskreten Wavelet-Transformation durchzuführen.

15. Datenverarbeitungsprodukt zum direkten Hochladen in die Speichereinheit eines numerischen Prozessors und mit enthaltenen Softwarecode-Teilen, um das Verfahren nach einem der Ansprüche 1 bis 8 durchzuführen, wenn das Produkt in einem Prozessor ausgeführt wird.

**Revendications**

1. Procédé de contrôle de la qualité de processus laser industriels, comprenant les étapes suivantes consistant à :

   concentrer un faisceau laser sur une zone de traitement,
   détecter le rayonnement émis par la zone de traitement à l'aide d'un moyen de détection à photodiode, et
   traiter les signaux émis par ledit moyen de détection,
   **caractérisé en ce que** ladite étape de traitement des signaux comprend les opérations suivantes :

      - le calcul de coefficients d'une transformée en ondelette discrète par rapport à une pluralité de valeurs d'échelle, fournissant ainsi une pluralité de signaux transformés (W) ;
      - le traitement desdits signaux transformés (W) de façon à obtenir une ou plusieurs valeur(s) (V) représentant la qualité du processus, afin que le contrôle de la qualité du processus puisse être effectué uniquement sur la base du signal ainsi traité, sans avoir besoin d'une comparaison avec un signal de référence prédéfini correspondant à une soudure de bonne qualité.

2. Procédé selon la revendication 1, **caractérisé en ce que** ladite étape de traitement des signaux transformés (W) comprend les étapes suivantes consistant à :

      - calculer (102), pour chaque signal appartenant à la pluralité de signaux transformés (W), un écart-type total (SDT);
      - séparer (103) chaque signal appartenant à l'ensemble de signaux transformés (W) en blocs dans le domaine temporel, et calculer un écart-type sur chacun desdits blocs, fournissant ainsi des valeurs d'écart-type de blocs (DSB) ;
      - convertir (104) ladite pluralité de signaux transformés (W) en une pluralité de signaux binaires (B) par le biais d'une étape de comparaison entre leur écart-type total (DST) et leurs écarts-types de blocs (DSB) ;
      - réaliser (105) une étape d'addition, échantillon par échantillon, de l'ensemble des signaux appartenant à ladite pluralité de signaux binaires (B), fournissant ainsi une valeur de somme (V) ;
      - utiliser (106) ladite valeur de somme (V) comme une valeur représentant une qualité de processus, en comparant ladite valeur de somme avec des plages d'erreur de façon à générer un signal d'erreur (E) définissant une qualité de processus.

3. Procédé selon la revendication 1 ou 2, **caractérisé en ce que**
   ladite pluralité de valeurs d'échelle par rapport auxquelles les coefficients de la transformée en ondelette discrète sont calculés correspond à un nombre S de valeurs d'échelle, S étant un entier correspondant à $\log_2 N - \log_2 32$, où N est un nombre d'échantillons collectés.

4. Procédé selon la revendication 2 ou 3, **caractérisé en ce que**
   ladite opération de conversion (104) de ladite pluralité de signaux transformés (W) en une pluralité de signaux binaires (B) envisage la vérification des conditions suivantes :

      - si DSB > DST, le signal est défini comme étant un « 1 » logique;
      - si DSB < DST, le signal est défini comme étant un « 0 » logique.

5. Procédé selon l'une des revendications 2 à 4, **caractérisé en ce que**
   ledit signal d'erreur (E) est obtenu en comparant ladite valeur de somme (V) avec trois plages d'erreur.

6. Procédé selon l'une des revendications 2 à 5, **caractérisé en ce que** l'opération de conversion (104) de ladite pluralité de signaux transformés (W) en une pluralité de signaux binaires (B) comprend l'opération d'extension de l'ensemble des signaux appartenant à ladite pluralité de signaux binaires (B) selon la même longueur (N).

7. Procédé selon l'une des revendications 2 à 6, **caractérisé en ce que** ladite étape de traitement des signaux émis par ledit moyen de détection envisage au préalable de collecter un signal (A) à une fréquence d'échantillonnage supérieure à $2^{16}$ Hz.

**8.** Procédé selon l'une des revendications 2 à 7, **caractérisé en ce qu'**il envisage en outre d'effectuer une opération de purge du bruit (100) sur le signal collecté (A) en appliquant une première opération spécifique de transformation en ondelette impliquant un certain nombre d'échelles utilisées en correspondance avec $\log^2 N$.

**9.** Système de contrôle de la qualité d'un processus laser mettant en oeuvre le procédé de la revendication 1, comprenant :

un moyen (4) de concentration d'un faisceau laser (L) sur une zone de soudage,
un moyen de détection à photodiode (7) destiné à détecter le rayonnement émis (E) par la zone de soudage, et
une unité de commande et de traitement électronique (8, 9) destinée à traiter les signaux émis par ledit moyen de détection (7), **caractérisé en ce que**
ladite unité de commande et de traitement électronique (8, 9) destinée à traiter les signaux émis par ledit moyen de détection (7) met en oeuvre le procédé de contrôle de la qualité d'un processus laser selon les revendications 1 à 7.

**10.** Système selon la revendication 9, **caractérisé en ce que** l'unité de commande et de traitement électronique susmentionnée (8, 9) comprend une unité de collecte (8) destinée à collecter le signal provenant dudit moyen de détection à une fréquence supérieure à $2^{16}$ Hz.

**11.** Système selon la revendication 9 ou 10, **caractérisé en ce que** le moyen de concentration susmentionné comprend un miroir semi-réfléchissant reflétant le faisceau laser devant être concentré sur la zone de traitement devant être traversée par le rayonnement émis par la zone de soudage de façon à ce qu'il atteigne le moyen de détection.

**12.** Système selon la revendication 9, **caractérisé en ce que** le moyen de détection à photodiode susmentionné comprend une photodiode ayant une sensibilité spectrale de 190 à 1100 nm.

**13.** Système selon la revendication 9, **caractérisé en ce que** le moyen de détection susmentionné comprend une lentille de focalisation (5).

**14.** Système selon la revendication 9, **caractérisé en ce que** ladite unité de commande et de traitement électronique (8, 9) comprend une banque de filtres à itération, qui exécute un codage de sous-bande de façon à mettre en oeuvre une opération de transformation en ondelette discrète.

**15.** Produit de traitement de données devant être téléchargé directement dans l'unité de stockage d'un processeur numérique et comprenant des parties de codes logiciels de façon à exécuter le procédé selon l'une quelconque des revendications 1 à 8 lorsque le produit est exécuté sur un processeur.

Fig.1

Fig.2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   EP 1275464 A